# EUROPEAN PATENT APPLICATION

(11) **EP 4 353 849 A1**
(43) Date of publication of application: **17.04.2024**
(21) Application number: 22811383.3
(22) Date of filing: 26.05.2022
(51) Int. Cl.: C21D 8/12, C22C 38/00, C22C 38/60, H01F 1/147, H01F 41/02

(54) **METHOD FOR MANUFACTURING GRAIN-ORIENTED ELECTROMAGNETIC STEEL SHEET**

(30) Priority: 28.05.2021 JP 2021090661
(71) Applicant: JFE Steel Corporation, Tokyo 100-0011 (JP)
(72) Inventor: TAKENAKA, Masanori, Tokyo 100-0011 (JP); IMAMURA, Takeshi, Tokyo 100-0011 (JP); TANAKA, Takaaki, Tokyo 100-0011 (JP); MATSUBARA, Yukihiro, Tokyo 100-0011 (JP)
(74) Representative: Grünecker Patent- und Rechtsanwälte PartG mbB
(86) International application number: PCT/JP2022/021551
(87) International publication number: WO 2022/250113

(57) **Abstract**

The present invention is a method for producing a grain-oriented electrical steel sheet comprising steps of heating a steel slab having an ingredient composition containing, by mass%, C: 0.02 to 0.10, Si: 2.5 to 5.5, Mn: 0.01 to 0.30, sol. Al: 0 or more but less than 0.010, N: 0 or more but less than 0.006, and at least one of S and Se in a total amount of 0 mass% or more but less than 0.010 with a remaining part being Fe and inevitable impurities to a temperature of 1300 or lower; subjecting the slab to hot rolling and then one cold rolling or two or more cold rolling with intermediate annealing between each rolling to obtain a cold-rolled sheet with a final sheet thickness; performing primary recrystallization annealing which also serves as decarburization annealing; applying an annealing separator; and subjecting the steel sheet to finishing annealing. In this method, after soaking in the annealing step preceding the cold rolling for achieving the final sheet thickness, the steel sheet is cooled from 800 to 400°C at an average cooling rate of 15°C/s or more and subsequently subjected to low-temperature heat treatment comprising holding the sheet at a temperature in a range of 60 to 100°C for 30 to 600 seconds.

## Description

### Technical Field

The present invention relates to a method for producing a so-called grain-oriented electrical steel sheet in which crystal grains are highly integrated, in terms of miller indices, into the { 110} orientation on the sheet surface and in the <001> orientation in the rolling direction.

### Background Art

Grain-oriented electrical steel sheets are soft magnetic materials that exhibit excellent magnetic properties, such as low iron loss and high magnetic flux density, which is caused by the crystal grains highly integrated into the { 110} <001> orientation (hereinafter, "Goss orientation") by using secondary recrystallization, and therefore primary used mainly as iron cores of electrical devices such as transformers. Indicators for evaluation of magnetic properties of grain-oriented electrical steel sheets generally used include magnetic flux density B₈ (T) at a magnetic field intensity of 800 (A/m), and an iron loss W_{17/50} per kilogram of a steel sheet (W/kg) caused by magnetization up to 1.7 (T) in an alternating current magnetic field at an excitation frequency of 50 (Hz).

A method for producing such a grain-oriented electrical steel sheet generally used involves preferentially growing Goss-oriented grains by causing fine precipitates called an inhibitor to precipitate in final finishing annealing, which provides mobility differences to crystal grain boundaries. For example, Patent Literature 1 discloses a method using an inhibitor such as AlN and MnS, whereas Patent Literature 2 discloses a method using an inhibitor such as MnS and MnSe, both of which have industrially been put into practical use.

These methods using the inhibitor are ideally conducted under a state where the inhibitors are finely and uniformly dispersed. To that effect, it is considered necessary to heat a steel slab that serves as a material to a high temperature of 1300°C or higher before performing hot rolling. The abovementioned methods using the inhibitor have problems in that scale loss increases due to high-temperature heating, resulting in a decrease in yield, cost increase in thermal energy and equipment, and complicated maintenance of the equipment. Accordingly, the demand for decreasing production costs has not sufficiently been met.

Whereas, as a technique for solving the abovementioned problems, a producing method using no inhibitors (an inhibitor-less method) has also been proposed. For example, Patent Literature 3 proposes a technique that uses a highly-purified steel material containing no inhibitor-forming component. This technique involves eliminating impurities such as inhibitor components as much as possible to reveal the dependence of grain boundary energy on grain boundary orientation difference angle during primary recrystallization and to thus preferentially achieve secondary recrystallization of the Goss-oriented grains without using inhibitors. The effect of this technique is called a "texture inhibition effect". This method requires no high-temperature slab heating and thus has many production advantages over methods using inhibitors.

Further, as a method for enhancing magnetic flux density by controlling primary recrystallization texture, Patent Literature 4 discloses a technique for preventing cracks in the steel sheet edge part and also enhancing magnetic properties by controlling a steel sheet temperature history from the start of winding a coil after annealing before final cold rolling to the start of cold rolling.

### Citation List

### Patent Literature

Patent Literature 1: JP-A-S40-015644
Patent Literature 2: JP-A-S51-013469
Patent Literature 3: JP-A-2000-129356
Patent Literature 4: JP-A-2003-253335

### Summary of Invention

### Technical Problem

However, according to the technique disclosed in Patent Literature 3 and so on where a material containing no inhibitor-forming components is used, a grain-oriented electrical steel sheet can be produced at a low cost without performing high-temperature slab heating, while the magnetic flux density of the product sheet is apt to be inferior compared to one produced using an inhibitor. The reason is that, since the power to inhibit normal grain growth (primary recrystallization grain growth) is insufficient due to not containing inhibitor-forming components, the degree of orientation integration of the Goss grains, which grow during secondary recrystallization, is low. It is therefore important to strictly control the texture of the primary recrystallization grains before the secondary recrystallization to produce a steel product with high magnetic density. Further, even if the technique disclosed in Patent Literature 4 is applied to the abovementioned technique, the magnetic flux density of a product sheet could not be sufficiently improved.

The present invention was made in view of the problems of the conventional techniques described above and aims to propose a method for producing a grain-oriented electrical steel sheet with a high magnetic flux density at low costs in a stable manner by using a steel material containing no inhibitor-forming components.

### Solution to Problem

The present inventors intensively studied how to solve the above-mentioned problems. As a result, we have reached the present invention due to the discovery that the magnetic flux density of a product sheet can be increased higher than conventional ones by performing, during an annealing step immediately preceding cold rolling (final cold rolling) that achieves a final sheet thickness, soaking, rapid cooling, low-temperature heat treatment to maintain a low temperature, optionally followed by applying strain to the steel sheet immediately preceding or during the low-temperature heat treatment, and properly managing the period between the completion of the low-temperature heat treatment and the start of the final cold rolling.

The present invention based on the abovementioned knowledge proposes a method for producing a grain-oriented electrical steel sheet including steps of: heating a steel slab having an ingredient composition containing C: 0.02 to 0.10 mass%, Si: 2.5 to 5.5 mass%, Mn: 0.01 to 0.30 mass%, sol. Al: 0 mass% or more but less than 0.010 mass%; N: 0 mass% or more but less than 0.006 mass%, and at least one of S and Se in a total amount of 0 mass% or more but less than 0.010 mass% with a remaining part being Fe and inevitable impurities to a temperature of 1300 or lower; subjecting the slab to hot rolling, optionally hot-band annealing, one cold rolling or two or more cold rolling with intermediate annealing between each rolling to obtain a cold-rolled sheet with a final sheet thickness; performing primary recrystallization annealing which also serves as decarburization annealing; applying an annealing separator; and subjecting the steel sheet to finishing annealing. The method is characterized by, after soaking in the annealing step immediately preceding the cold rolling for achieving the final sheet thickness, cooling the sheet from 800 to 400°C at an average cooling rate of 15°C/s or more, and subsequently performing low-temperature heat treatment including holding the sheet at a temperature in a range of 60 to 100°C for 30 to 600 seconds.

The method for producing a grain-oriented electrical steel sheet of the present invention is characterized by, after soaking in the annealing step preceding the cold rolling for achieving the final sheet thickness, applying strain on the steel sheet before or during the low-temperature heat treatment comprising holding the sheet at a temperature in a range of 60 to 100°C for 30 to 600 seconds, after cooling from 800 to 400°C at an average cooling rate of 15°C/s or more.

The method for producing a grain-oriented electrical steel sheet of the present invention is also characterized by applying the strain on the steel sheet using at least one method selected from bending performed once or more by winding the steel sheet around a roll at a 90° angle or more; and a light draft rolling method.

The method for producing a grain-oriented electrical steel sheet of the present invention is also characterized by starting final cold rolling within 300 hours after completion of the low-temperature heat treatment.

The method for producing a grain-oriented electrical steel sheet of the present invention is characterized by including steps satisfying the following conditions:
a hot rolling step including heating a steel slab, performing rough rolling of one or more passes in a temperature range from 900 to 1200°C, performing finishing rolling of two or more passes in a temperature range from 700 to 1000°C to obtain a hot-rolled sheet, and winding the sheet into a coil at a winding temperature of 400 to 750°C;
optionally, a hot-band annealing step including holding the hot-rolled sheet at a temperature from 800 to 1250°C for 5 seconds or longer and then cooling the sheet from 800 to 400°C at a rate of 5 to 100°C/s;
optionally, an intermediate annealing step including holding the sheet at a temperature from 800 to 1250°C for 5 seconds or longer and then cooling the sheet from 800 to 400°C at a rate of 5 to 100°C/s;
a cold rolling step performed so that a total rolling reduction at the final cold rolling falls within the range of 80 to 92%;
a primary recrystallization annealing step serving as decarburization annealing including holding the sheet at a temperature from 750 to 950°C for 10 seconds or longer under a wet atmosphere containing H₂ and N₂ and having a dew point of 20 to 80°C;
an annealing separator applying step including applying an annealing separator mainly composed of MgO to a surface of the steel sheet in an amount of 2.5 g/m² or more per surface; and
a finishing annealing step that includes purification by holding the sheet at a temperature of 1050°C to 1300°C for 3 hours or longer and that is conducted under an H₂-containing atmosphere for a part of a temperature range of 800°C or higher including at least the purification.

The method for producing a grain-oriented electrical steel sheet of the present invention is characterized in that the steel slab to be used contains, in addition to the ingredient composition, at least one selected from the group consisting of: Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%, and Zr: 0 to 0.10 mass% or less.

The method for producing a grain-oriented electrical steel sheet of the present invention is characterized in that the steel slab to be used contains, in addition to the ingredient composition, at least one selected from the group consisting of Co: 0 to 0.0500 mass% and Pb: 0 to 0.0100 mass%.

The method for producing a grain-oriented electrical steel sheet of the present invention is characterized in that the steel slab to be used contains, in addition to the ingredient composition, at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%.

### Advantageous Effects of Invention

According to the method for producing a grain-oriented electrical steel sheet of the present invention, it is possible to produce the grain-oriented electrical steel sheet having high magnetic flux density at a low cost and in a stable manner.

### Brief Description of Drawings

FIGs. 1(a) to 1(i) present charts that illustrate the impact of the cooling rate in an annealing step immediately preceding final cold rolling, low-temperature heat treatment conditions, and the period between low-temperature heat treatment and the start of the final cold rolling on the magnetic flux density of a product sheet.
FIGs. 2(a) to 2(d) are charts that illustrate the impact of low-temperature heat treatment conditions and strain application to a steel sheet on the magnetic flux density of a product sheet.

### Description of Embodiments

To begin with, experiments that helped the development of the present invention will be described.

### <Experiment 1>

Steel slabs each having an ingredient composition containing C: 0.03 mass%, Si: 3.2 mass%, Mn: 0.08 mass%, sol. Al: 0.005 mass%, N: 0.004 mass%; and S: 0.005 mass% with the remaining part containing Fe and inevitable impurities were produced. After being heated to 1200°C, the steel slab was hot rolled to form a hot-rolled sheet with a sheet thickness of 2.5 mm, cooled with water, and then wound into a coil at 600°C. The hot-rolled sheet was then subjected to hot-band annealing involving soaking at 1000°C for 60 seconds and cooling with water at three variable levels of average cooling rates from 800°C to 400°C, 5°C/s, 15°C/s, and 50°C/s, and subsequently cooling to 40°C or lower. After removing scales from the steel sheet surface, the steel sheet was subjected to low-temperature heat treatment involving heating to 40, 60, 80, 100, and 120°C each, and holding the sheet at each temperature for 0, 30, 300, 600, and 900 seconds followed by being cooled with water and wound into a coil again. Cold rolling was started after 50, 300, and 500 hours had elapsed since the completion of the low-temperature heat treatment, forming a cold-rolled sheet with a final sheet thickness (a product sheet thickness) of 0.27 mm.

The cold-rolled sheet was then subjected to primary recrystallization annealing which also served as decarburization annealing at 820°C for 60 seconds under a wet atmosphere containing H₂ and N₂ and having a dew point of 45°C. After an annealing separator mainly composed of MgO was applied to the steel sheet surface in an amount of 3 g/m² per surface and dried, the sheet was subjected to finishing annealing including secondary recrystallization and purification at 1200°C for 5 hours. The finishing annealing used an atmosphere mainly composed of H₂ for the temperature range of 1100°C or higher. After removing unreacted annealing separator from the surface of the steel sheet resulting from the finishing annealing and then forming a phosphate-based tension-applying insulation coating thereon, flattening annealing which also served as baking and steel sheet flattening was carried out, obtaining a product sheet.

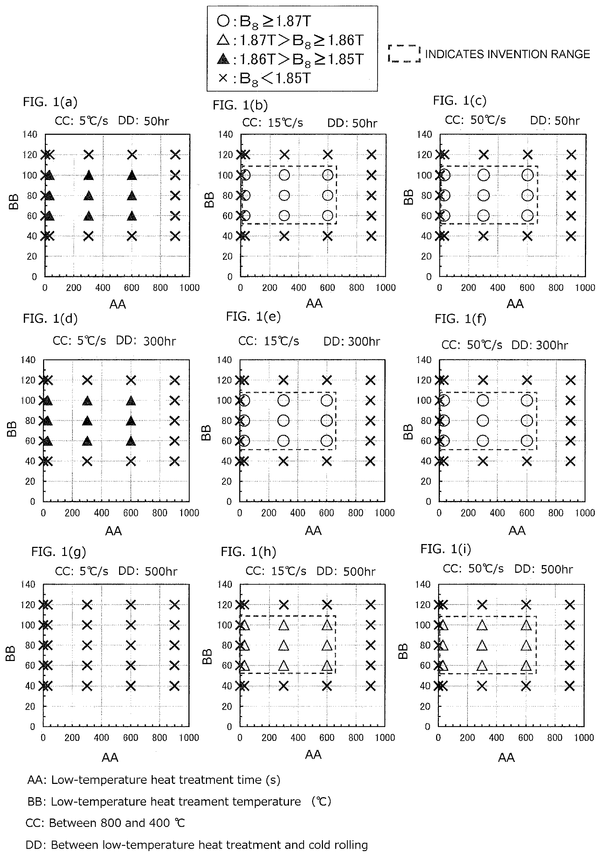

Test specimens for the measurement of magnetic properties were taken from the thus-obtained product sheet, and the magnetic flux density B₈ at a magnetic force of 800 Aim was measured according to the method defined by JIS C 2550-1 (2011). The results thereof were organized and shown in FIG. 1. From these results, it is observed that, in order to achieve an excellent magnetic flux density of B₈ ≥ 1.86 T, it is necessary to conduct a low-temperature heat treatment comprising cooling the sheet from 800°C to 400°C during the cooling process following the soaking in the hot-band annealing at an average cooling rate of 15°C/s or higher and to, after the cooling, holding the sheet at a temperature in the range of 60 to 100°C for 30 to 600 seconds. It is also observed that a more excellent magnetic flux density of B₈ ≥ 1.87 T can be obtained by starting the final cold rolling within 300 hours after the completion of the low-temperature heat treatment.

The magnetic flux density of the product sheet is improved by ensuring that the average cooling rate from 800 to 400°C in the cooling process of the hot-band annealing is 15°C/s or more, and performing the low-temperature heat treatment involving holding the sheet in the range of 60 to 100°C for 30 to 600 seconds, optionally accompanied by starting the final cold rolling within 300 hours after the completion of the low-temperature heat treatment, the reason of which has not yet sufficiently clarified but the present inventors consider as follows.

The rapid cooling in the temperature range from 800 to 400°C after the soaking in the hot-band annealing causes the carbon dissolved in steel to remain in a dissolved state without being precipitated as carbides, also accompanying the introduction of many lattice defects such as dislocations, void holes, and the like to the inside of the steel sheet. When the low-temperature heat treatment is performed under such a condition, the dissolved carbon is adhered to by the lattice defects, preventing the precipitation of carbides. However, when the temperature of the low-temperature heat treatment is too low, or when the holding period is too short, the adhesion effect is not sufficiently exerted. Whereas, when the temperature of the low-temperature heat treatment is too high, or when the holding period is too long, carbides are precipitated.

However, the dissolved carbon that can be freely movable without being adhered to by the lattice defects may still remain in the steel sheet subjected to the low-temperature heat treatment. Accordingly, by restricting the period before starting the final cold rolling and performing cold rolling before the precipitation of the dissolved carbon is precipitated as carbides, the dissolved carbon can remain also in the steel sheet resulting from the final cold rolling. It is considered that, as described also in Patent Literature 4, raw material containing a large amount of dissolved carbon has an effect of improving the primary recrystallization texture to be formed in the subsequent cold rolling and decarburization annealing, and that as a result, only the grains having the ideal Goss orientation among the primary recrystallization grains can grow into secondary recrystallization grains at the time of the finishing annealing, enhancing the magnetic flux density of the product sheet.

### <Experiment 2>

Steel slabs each having an ingredient composition containing C: 0.06 mass%, Si: 3.5 mass%, Mn: 0.10 mass%, sol. Al: 0.003 mass%, N: 0.002 mass%; and S: 0.008 mass% with the remaining part containing Fe and inevitable impurities were produced. The steel slab was heated to 1280°C, hot rolled to form a hot-rolled sheet with a sheet thickness of 2.8 mm, cooled with water, and then wound into a coil at 600°C. After removing scales from the steel sheet surface, the steel sheet was subjected to cold rolling for the first time to achieve an intermediate sheet thickness of 1.5 mm, soaked at 1050°C for 120 seconds, and cooled with water from 800°C to 400°C at an average cooling rate of 30°C/s, before being further cooled to 40°C or lower. After removing scales from the steel sheet surface, some of the coils underwent bending once involving winding around a roll with a 1000 mmφ diameter at the angles of 60°, 90°, and 180° at a threading speed of 30 m/min, and then underwent low-temperature heat treatment by holding the sheet at 50, 70, 90° and 110°C for 20, 200, 400, 600, and 800 seconds, followed by cooling with water and winding into a coil again. After 50 hours had elapsed after the completion of the low-temperature heat treatment, cold rolling (final cold rolling) for the second time was carried out to obtain a cold-rolled sheet having a final sheet thickness of 0.27 mm.

The cold-rolled sheet was then subjected to primary recrystallization annealing which also served as decarburization annealing at 880°C for 100 seconds under a wet atmosphere containing H₂ and N₂ and having a dew point of 50°C. After an annealing separator mainly composed of MgO was applied to the steel sheet surface in an amount of 7.5 g/m² per surface and dried, the sheet was subjected to finishing annealing including secondary recrystallization and purification at 1180°C for 20 hours. The finishing annealing used an atmosphere mainly composed of H₂ for the temperature range of 900°C or higher. After removing unreacted annealing separator from the surface of the steel sheet resulting from the finishing annealing and then forming a phosphate-based tension-applying insulation coating thereon, flattening annealing which also served as baking and steel strip flattening was carried out, obtaining a product sheet.

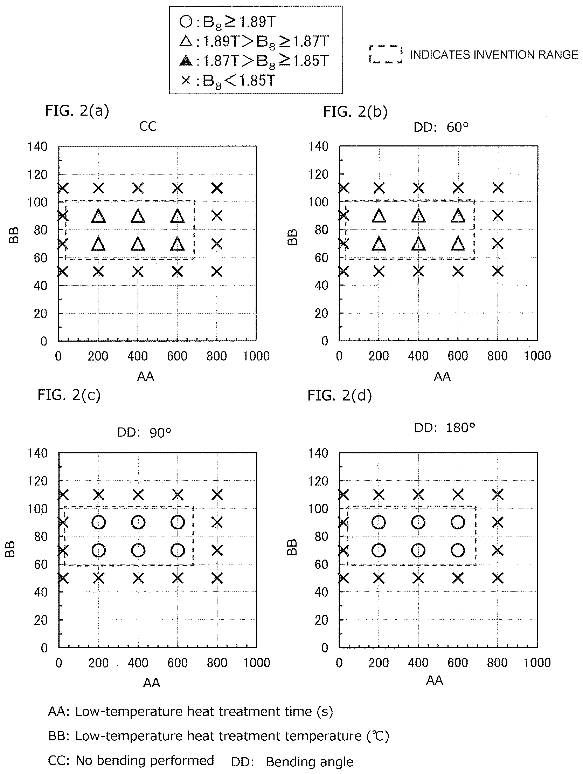

Test specimens for the measurement of magnetic properties were taken from the thus-obtained product sheet, and the magnetic flux density B₈ at a magnetic force of 800 Aim was measured according to the method defined by JIS C 2550-1 (2011). The results thereof are organized and shown in FIG. 2. As shown in FIG. 2, a high magnetic flux density of B₈ >_ 1.89 T can be achieved by, in the annealing step preceding the final cold rolling, performing bending involving winding the sheet around a roll at an angle of 90° to apply strain on the steel sheet after cooling the sheet from 800 to 400°C at an average cooling rate of 15°C/s or more and before performing low-temperature heat treatment involving holding the sheet at a temperature in a range of 60 to 100°C for 30 to 600 seconds.

The magnetic flux density of the product sheet is improved by, in the annealing process before the final cold rolling, performing bending involving winding the sheet around a roll at an angle of 90° to apply strain on the steel sheet after cooling the sheet from 800 to 400°C at an average cooling rate of 15°C/s or more and before performing the low-temperature heat treatment involving holding the sheet in the range of 60 to 100°C for 30 to 600 seconds, the reason of which has not yet sufficiently clarified but the present inventors consider as follows.

The rapid cooling effect in the intermediate annealing and the effect of the subsequent low-temperature heat treatment are the same as those described in <Experiment 1>. Applying strain on the steel sheet by performing bending involving winding the sheet around a roll at an angle of 90° angle or more increases the density of the lattice defects in the steel sheet and causes a larger amount of the dissolved carbon to adhere to the lattice defects in the subsequent low-temperature heat treatment, improving the primary recrystallization texture and enhancing the magnetic flux density of the product sheet.

Next, the ingredient composition required for the steel material (a slab) used for producing a grain-oriented electrical steel sheet of the present invention will be described.

### C: 0.02 to 0.10 mass%

C is an ingredient necessary for improving the hot-rolled sheet texture by using an austenite-ferrite transformation that occurs at the time of the hot rolling and the soaking in the hot-band annealing. The C content of less than 0.02 mass% causes a grain boundary strengthening effect of C to be lost and causes a defect, such as a slab crack, that hinders production. Whereas, the C content exceeding 0.10 mass% not only increases the load in the decarburization annealing step but also causes incomplete decarburization, which may cause magnetic aging in the product sheet. For these reasons, the C content should fall within the range of 0.02 to 0.10 mass%, preferably within the range of 0.03 to 0.08 mass%.

### Si: 2.5 to 5.5 mass%

Si is an ingredient extremely effective for enhancing the specific resistance of steel and decreasing eddy-current loss that constitutes a part of iron loss. When Si content is less than 2.5 mass%, however, the decreasing effect is too small to achieve excellent iron loss properties. Although the specific resistance of steel monotonously increases until the Si content reaches 11 mass%, when Si content exceeds 5.5 mass%, workability becomes significantly low, and the rolling becomes difficult. For these reasons, the Si content should be kept in the range of 2.5 to 5.5 mass%, preferably in the range of 3.0 to 4.0 mass%.

### Mn: 0.01 to 0.30 mass%

Mn is an ingredient effective for improving hot workability. When the Mn content is less than 0.01 mass%, however, the above effect is not sufficiently obtained, while, when the Mn content exceeds 0.30 mass%, the magnetic flux density of a product sheet lowers. Therefore, the Mn content should fall within the range of 0.01 to 0.30 mass%, preferably within the range of 0.05 to 0.20 mass%.

sol. Al: 0 mass% or more but less than 0.010 mass%; N: 0 mass% or more but less than 0.006 mass%; and at least one of S and Se in a total amount of 0 mass% or more but less than 0.010 mass%.

The present invention proposes a method for causing the Goss orientation to develop secondary recrystallization by using the texture inhibition effect without using inhibitors, to achieve secondary recrystallization. The contents of the inhibitor-forming ingredients, Al, N, S, and Se are required to be reduced to the lowest possible levels. Therefore, it is necessary to use a steel material with the following ingredients reduced to each level: Al in the form of sol. Al (acid-soluble Al): less than 0.010 mass%, N: less than 0.0060 mass%, and at least one of S and Se in a total amount of less than 0.010 mass%. The range is more preferably sol. Al: 0 to 0.008 mass%, N: 0 to 0.0050 mass%, and at least one of S and Se in a total amount of 0 to 0.007 mass%. However, these ingredients are not required to be 0 mass% because decreasing these ingredients can cause an increase in production costs.

To enhance the magnetic properties, the steel material used in the present invention may contain, in addition to the abovementioned basic ingredients, at least one selected from the group consisting of: Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%, and Zr: 0 to 0.10 mass% or less. If any of the ingredients exceeds the upper limit value, it may prevent the development of secondary recrystallization grains instead and deteriorate the magnetic properties. From the viewpoint of further enhancing the magnetic properties, it is desirable to keep the contents as follows: Ni: 0.01 mass% or more, Sb: 0.005 mass% or more, Sn: 0.005 mass% or more, Cu: 0.01 mass% or more, Cr: 0.01 mass% or more, P: 0.005 mass% or more, Mo: 0.005 mass% or more, Nb: 0.001 mass% or more, V: 0.001 mass% or more, B: 0.0002 mass% or more, Bi: 0.005 mass% or more, and Zr: 0.001 mass% or more.

To enhance the magnetic properties, the steel material used in the present invention may contain, in addition to the ingredient composition described above, at least one selected from the group consisting of Co: 0 to 0.0500 mass% and Pb: 0 to 0.0100 mass%. If any of the ingredients exceeds the abovementioned upper limit value, the development of secondary recrystallization grains is inhibited, deteriorating the magnetic properties instead. From the viewpoint of enhancing the magnetic properties, it is desirable to add the ingredients in the following amounts: Co: 0.0020 mass% or more and Pb: 0.0001 mass% or more.

To enhance the magnetic properties, the steel material used in the present invention may contain, in addition to the ingredient composition described above, at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%. If any of the ingredients exceeds the abovementioned upper limit value, the development of secondary recrystallization grains is inhibited, deteriorating the magnetic properties instead. From the viewpoint of further enhancing the magnetic properties, it is desirable to add the ingredients in the following amounts: As: 0.0010 mass% or more, Zn: 0.0010 mass% or more, W: 0.0010 mass% or more, Ge: 0.0001 mass% or more, and Ga: 0.0001 mass% or more.

In the steel slab used in the present invention, the remaining part other than the abovementioned ingredients is Fe and inevitable impurities. In this context, the term "inevitable impurities" denotes components that inevitably enter from raw materials, scrap, a ladle for steel production, and so on, at the time of the production of the slab. Further, Ti contained as an inevitable impurity is a harmful ingredient that forms a nitride and hinders secondary recrystallization of Goss grains. Although excessively decreasing Ti leads to an increase in refining costs, the content of 0.010 mass% or less is acceptable. A more preferable content is 0.0020 mass% or less.

Next, a method for producing a grain-oriented electrical steel sheet of the present invention will be described.

The slab to be steel material for a grain-oriented electrical steel sheet according to the present invention is preferably produced by melting steel with the abovementioned ingredient composition through an ordinary publicly-known refining process and further implementing a commonly known method such as an ingot-making method or a continuous casting method. Alternatively, it is also acceptable to produce a thin cast piece with a thickness of 100 mm or less by a direct casting method.

The thus-obtained steel material (the slab or the thin cast piece) is heated to a prescribed temperature by an ordinary method and then hot rolled or may be hot rolled immediately after casting without heating. Since the slab contains no inhibitor-forming ingredients, the slab heating temperature before hot rolling is preferably 1300°C or lower from the viewpoint of decreasing costs.

The subsequent hot rolling preferably includes rough rolling of one or more passes conducted in the temperature range from 900°C to 1200°C and finishing rolling of two or more passes conducted in the temperature range from 700°C to 1000°C, from the viewpoint of controlling the texture of the hot-rolled sheet. From the viewpoint of preventing defects including cracks, the coil winding temperature performed after the hot rolling is preferably in the range of 400 to 750°C, and more preferably in the range of 500 to 700°C.

The steel sheet after the hot rolling may optionally undergo hot-band annealing, thereby archiving a more uniform texture and less variation in magnetic properties. When the hot-band annealing is conducted, it is preferable to perform soaking involving holding the sheet at a temperature in the range of 800 to 1250°C for 5 seconds or longer, more preferably in the range of 900 to 1150°C for 10 to 180 seconds, from the viewpoint of uniformizing the texture. Further, the cooling rate of the cooling after the soaking is preferably in the range of 5 to 100°C/s in the temperature range of 800 to 400°C from the viewpoint of controlling forms of the second phase and precipitates. It is more preferably in a range of 15 to 80°C/s.

Next, it is desirable to perform descaling to remove scales formed on the steel sheet surface during the hot rolling by a method such as pickling using heated acid or a method that mechanically removes the scale.

The hot-rolled sheet after the descaling is cold rolled once, or two or more times with an intermediate annealing between each rolling to form a cold-rolled sheet with a final sheet thickness (a product sheet thickness). When the intermediate annealing is performed, it is preferable to perform soaking involving holding the sheet in the temperature range of 800 to 1250°C for 5 seconds or longer from the viewpoint of controlling the texture. Further, the cooling rate of the cooling after the soaking is preferably in the range of 5 to 100°C/s in the temperature range of 800 to 400°C from the viewpoint of controlling the forms of the second phase and precipitates. It is more preferably in a range of 15 to 80°C/s. When intermediate annealing is carried out, it is preferable to perform cleaning to remove the rolling oil used in the previous process. It is also preferable to remove the scale that was formed on the steel sheet surface, after the intermediate annealing. In this invention, the cold rolling to archive the final sheet thickness is referred to as "final cold rolling".

The most important feature of the present invention is, in the annealing step immediately preceding the final cold rolling, cooling the sheet from 800 to 400°C at the average cooling rate of 15°C/s or more in the cooling process after the soaking and subsequently performing the low-temperature heat treatment involving holding the sheet at a temperature of 60 to 100°C for 30 to 600 seconds. Note that the annealing step immediately preceding the final cold rolling denotes the hot-band annealing when the steel sheet is cold rolled to the final sheet thickness (product sheet thickness) by one cold rolling while it denotes the intermediate annealing immediately preceding the final cold rolling when cold rolling is performed two or more times with intermediate annealing between each rolling. Accordingly, when the hot-band annealing step or the intermediate annealing step described above corresponds to the annealing step immediately preceding the final cold rolling, the aforementioned cooling condition (the cooling rate from 800 to 400°C: 5°C/s to 100°C/s) needs to fit the abovementioned cooling condition (the average cooling rate from 800 to 400°C: 15°C/s or higher).

The low-temperature heat treatment step which follows the annealing step and involves holding the sheet at a temperature in the range of 60 to 100°C for 30 to 600 seconds may subsequently be performed in the same annealing line or may be performed in a different line after the sheet is cooled to 100°C or lower and once rolled into a coil. A preferable condition for the low-temperature heat treatment is to hold the sheet at a temperature in the range of 70 to 90°C for 60 to 300 seconds. As long as the holding temperature and holding period are within the above ranges, the low-temperature heat treatment may be carried out together (simultaneously) with another treatment such as pickling.

The second most important feature of the present invention is to apply strain to the steel sheet immediately preceding or during the low-temperature heat treatment. Methods for applying strain may include a general method such as bending by winding the sheet around a roll or a mild cold rolling. Bending should be performed at least once, preferably 2 to 10 times by winding the sheet around a roll with a diameter in the range of 200 to 2500 mmφ, at an angle of 90° or more. The roll may use a dedicated roll for applying strain or may be substituted with a deflector roll or a pinch roll that is provided in the production line. The strain may be applied in an annealing or pickling line or may be performed in a different production line to apply strain. Whereas, when performing light draft rolling, for example, it is desirable to use a skin pass rolling mill at a rolling reduction in the range of 0.5 to 10%, more preferably in the range of 1 to 5%.

Another important feature of the present invention is to start the final cold rolling within 300 hours after the completion of the low-temperature heat treatment. When 300 hours or longer have elapsed, the amount of dissolved carbon remaining in the steel sheet decreases, and the primary recrystallization texture deteriorates, leading to the deterioration of the magnetic properties of the product sheet. More preferably, the final cold rolling should be started within 100 hours or less.

To achieve better primary recrystallization texture before secondary recrystallization, it is preferable to keep the total rolling reduction of the final cold rolling in the range of 80 to 92%. Further, from the viewpoint of improving the recrystallization texture and enhancing the magnetic properties, it is desirable to carry out warm rolling involving rolling with an increased steel sheet temperature at the cold rolling increased 100 to 300°C or to carry out aging treatment once or two or more times during the cold rolling at a temperature in the range of 100 to 300°C. From the viewpoint of decreasing the rolling load and controlling the rolling shape, a lubricant such as rolling oil is preferably used in the abovementioned cold rolling.

After undergoing degreasing or pickling to purify the surface as necessary, the cold-rolled sheet with the final sheet thickness is subjected to primary recrystallization annealing which also serves as the decarburization annealing. The decarburization annealing preferably involves holding the steel sheet in the temperature range of 750 to 950°C for 10 seconds or longer. The atmosphere for the decarburization annealing preferably uses a wet atmosphere including H₂ and N₂ and having a dew point in the range of 20 to 80°C for a part of or over the decarburization annealing. A more preferable condition is to hold the sheet in the temperature range of 800 to 900°C for 30 to 180 seconds under a wet atmosphere with a dew point of 40 to 70 °C. As a result of the decarburization annealing, the C content in the steel is decreased to 0.0050 mass% or less, which is unlikely to cause magnetic aging.

An annealing separator mainly composed of MgO is preferably applied to the surface of the steel sheet after the decarburization annealing with a coating weight of 2.5 g/m² or more per side. MgO may be applied to the steel sheet in a slurry form or may be applied in a dry form through electrostatic application. When using the slurry form, the temperature of the slurry solution is preferably maintained at 15°C or lower to prevent the viscosity from increasing. Also, the slurry solution is preferably preserved separately in a mixing tank and a solution tank used for the application to maintain the slurry concentration at a constant level. Note that "an annealing separator mainly composed of MgO" means that the MgO content is 60 mass% or more in the annealing separator as a whole.

The steel sheet coated with the annealing separator is subjected to finishing annealing in a state where the steel sheet is wound into a coil, to develop secondary recrystallization grains and form a forsterite coating on the steel sheet surface. In the treatment, it is preferable to heat the sheet to 800°C or higher to complete the secondary recrystallization, and, to form the forsterite coating, it is preferable to heat the sheet to 1050°C or higher. To eliminate impurities such as the inhibitor-forming ingredients from the steel and to achieve excellent magnetic properties, it is preferable to conduct purification by holding the sheet at a temperature range of 1050 to 1300°C for 3 hours or longer with an atmosphere containing H₂ for a part of or whole the temperature range of 800°C or higher. The purification can reduce the inhibitor-forming ingredients to a level of impurities. The finishing annealing is a high-temperature and long-time heat treatment and therefore the coil is annealed in an upended state. It is preferable to wind a band or the like around the outer circumference of the coil to prevent the outer winding from being unwound before the finishing annealing.

After the finishing annealing, it is preferable to remove the unreacted annealing separator from the surface of the steel sheet by washing with water, brushing, or pickling, and then conduct flattening annealing that corrects a winding curl and shape defects of the steel sheet occurred during the finishing annealing to decrease iron loss.

Gain-oriented electrical steel sheets are often used in a laminated state, and in this case, an insulation coating is preferably formed on the steel sheet surface to secure the insulation properties. The insulation coating can preferably use a tension-applying type, which applies strain to the steel sheet, to decrease the iron loss and may be formed on the steel sheet surface by applying coating liquid before the flattening annealing and baking it during the flattening annealing or may be formed in another line. By applying other methods including forming a tension-applying coating via a binder or vapor-depositing an inorganic matter on a steel sheet surface layer using a physical vapor deposition scheme or a chemical vapor deposition scheme, good adhesion and an excellent iron loss decreasing effect can be achieved.

To further decrease the iron loss, a magnetic domain segmentation treatment may be performed in any one of the steps after the cold rolling by forming grooves with an etching process on the steel sheet surface, by forming a thermal strain region by emitting thermal energy beams of laser, plasma, or the like on the steel sheet surface after the formation of the insulation coating, or by forming a processing strain region by pressing a roller having protrusions or the like against the steel sheet surface.

### Example 1

Steel slabs each having an ingredient composition containing C: 0.03 mass%, Si: 3.1 mass%, Mn: 0.14 mass%, sol. Al: 0.008 mass%, N: 0.004 mass%; and S: 0.002 mass% with the remaining part containing Fe and inevitable impurities were produced. After being heated to 1250°C, the steel slab was hot rolled to form a hot-rolled sheet with a sheet thickness of 2.5 mm and then wound into a coil at 600°C. The hot-rolled sheet was then subjected to hot-band annealing involving soaking at 950°C for 60 seconds and cooling with water from 800°C to 400°C at an average cooling rate of 30°C/s. After removing scales from the steel sheet surface, the steel sheet was cold rolled for the first time to an intermediate sheet thickness of 1.8 mm and then subjected to intermediate annealing involving soaking at 1050 °C for 30 seconds and cooling with water from 800°C to 400°C at three variable levels of average cooling rates, 10°C/s, 35°C/s, and 80°C/s followed by cooling to 40°C or lower.

The steel sheet was subjected to a low-temperature heat treatment involving holding the sheet at 80°C for 200 seconds while pickling, then cooled, and wound in a coil again. In this treatment, strain was applied to the steel sheet under conditions A to E indicated in Table 1. Specifically, condition A denotes applying no strain; condition B denotes performing bending once on by winding the sheet around a roll of a 1000 mmφ diameter at a 90° angle at a sheet threading speed of 50 m/min after the intermediate annealing but before the low-temperature heat treatment; condition C denotes performing bending three times by winding the sheet around a roll of a 2000 mmφ diameter at a 180° angle at a sheet threading speed of 50 m/min after the intermediate annealing but before the low-temperature heat treatment; condition D denotes performing light draft rolling once of 2% rolling reduction using a skin pass rolling mill that has a work roll of a 1000 mmφ diameter at a sheet threading speed of 50 m/min after the intermediate annealing but before the low-temperature heat treatment; and condition E denotes performing bending process once by winding the sheet around a roll of a 1000 mmφ diameter at a 90° angle at a sheet threading speed of 50 m/min during the low-temperature heat treatment (with a holding period of 100 seconds).

After 200 hours had elapsed after the completion of the low-temperature heat treatment, cold rolling (final cold rolling) for the second time was carried out to obtain a cold-rolled sheet having a final sheet thickness of 0.18 mm. The cold-rolled sheet was then subjected to primary recrystallization annealing which also served as decarburization annealing at 800°C for 60 seconds under a wet atmosphere containing H₂ and N₂ and having a dew point of 40°C. After an annealing separator mainly composed of MgO was applied to the steel sheet surface in an amount of 5 g/m² per surface and dried, the sheet was subjected to finishing annealing including secondary recrystallization and purification at 1160°C for 5 hours. The finishing annealing used an atmosphere mainly composed of H₂ for the temperature range of 1100°C or higher. After removing unreacted annealing separator from the surface of the steel sheet resulting from the finishing annealing and then forming a phosphate-based tension-applying insulation coating thereon, flattening annealing which also served as baking and steel sheet flattening was carried out, obtaining a product sheet.

Test specimens for the measurement of magnetic properties were taken from the thus-obtained product sheet, and the magnetic flux density B₈ at a magnetic force of 800 Aim was measured according to the method defined by JIS C 2550-1 (2011). As seen from the results shown in Table 1, the product sheets produced under the conditions compliant with the present invention all exhibited excellent magnetic flux density of B₈ ≥ 1.87 T. In particular, the steel sheets that used a cooling rate of 80°C/s in the intermediate annealing exhibited a more excellent magnetic flux density of B₈ ≥ 1.89 T.

**[Table 1]**

| Conditions | Timing for applying strain | Method for applying strain | Cooling in intermediate annealing : 10°C/s | | Cooling in intermediate annealing : 35°C/s | | Cooling in intermediate annealing : 80°C/s | |
|---|---|---|---|---|---|---|---|---|
| | | | Magnetic flux density B₈(T) | Remarks | Magnetic flux density B₈(T) | Remarks | Magnetic flux density B₈(T) | Remarks |
| A | Not applied | - | 1.83 | Comparative Example | 1.87 | Invention Example | 1.88 | Invention Example |
| B | Before low-temperature heat treatment | 90° bending once with 1000mmϕ roll | 1.84 | Comparative Example | 1.89 | Invention Example | 1.90 | Invention Example |
| C | Before low-temperature heat treatment | 180° bending three times with 2000mmϕ roll | 1.84 | Comparative Example | 1.90 | Invention Example | 1.90 | Invention Example |
| D | Before low-temperature heat treatment | 2% cold rolling with 1000mmϕ work roll | 1.82 | Comparative Example | 1.89 | Invention Example | 1.89 | Invention Example |
| E | During low-temperature heat treatment | 90° bending once with 1000mmϕ roll | 1.83 | Comparative Example | 1.90 | Invention Example | 1.90 | Invention Example |

### Example 2

Steel slabs each having an ingredient composition containing the various ingredients shown in Table 2 with the remaining part containing Fe and inevitable impurities were produced. After being heated to 1250°C, the steel slab was hot rolled to form a hot-rolled sheet with a sheet thickness of 2.0 mm, cooled with water, and then wound into a coil at 500°C. Each hot-rolled sheet was then subjected to hot-band annealing involving soaking at 1050°C for 30 seconds and cooling with water from 800°C to 400°C at an average cooling rate of 50°C/s, followed by cooling to 40°C or lower. Subsequently, the steel sheet was subjected to a low-temperature heat treatment involving holding the sheet at 90°C for 60 seconds while pickling, then cooled with water, and wound in a coil. After the hot-band annealing but before the low-temperature heat treatment, bending was performed three times by winding the sheet around a roll with a 1000 mmφ diameter at the angles of 90°.

After 20 hours had elapsed after the low-temperature heat treatment, cold rolling (final cold rolling) for the second time was carried out to obtain a cold-rolled sheet with a final sheet thickness of 0.23 mm. The cold-rolled sheet was then subjected to primary recrystallization annealing which also served as decarburization annealing at 840°C for 100 seconds under a wet atmosphere containing H₂ and N₂ and having a dew point of 55°C. After an annealing separator mainly composed of MgO was applied to the steel sheet surface in an amount of 5 g/m² per surface and dried, the sheet was subjected to finishing annealing including secondary recrystallization and purification at 1200°C for 20 hours. The finishing annealing used an atmosphere mainly composed of H₂ for the temperature range of 1000°C or higher. After removing unreacted annealing separator from the surface of the steel sheet resulting from the finishing annealing and then forming a phosphate-based tension-applying insulation coating thereon, flattening annealing which also served as baking and steel sheet flattening was carried out, obtaining a product sheet.

Test specimens for the measurement of magnetic properties were taken from the thus-obtained product sheet, and the magnetic flux density B₈ at a magnetic force of 800 Aim was measured according to the method defined by JIS C 2550-1 (2011). As seen from the results shown in Table 2, the product sheets produced using steel material (slab) having an ingredient composition compliant with the present invention under a condition compliant with the present invention all exhibited excellent magnetic flux density of B₈ ≥ 1.89 T. In particular, the steel sheets with the arbitrary ingredients described above added in proper amounts exhibited a more excellent magnetic flux density of B₈ ≥ 1.91 T.

**[Table 2-1]**

| 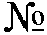 | Ingredient composition (mass%) | | | | | | | | | Magnetic flux density B₈(T) | Remarks |
|---|---|---|---|---|---|---|---|---|---|---|---|
| | C | Si | Mn | sol.Al | N | S | Se | S+Se | Others | | |
| 1 | 0.01 | 3.2 | 0.15 | 0.005 | 0.003 | 0.004 | 0.000 | 0.004 | - | 1.69 | Comparative Example |
| 2 | 0.02 | 3.2 | 0.10 | 0.003 | 0.002 | 0.007 | 0.002 | 0.009 | - | 1.89 | Invention Example |
| 3 | 0.04 | 3.0 | 0.15 | 0.004 | 0.002 | 0.003 | 0.000 | 0.003 | - | 1.89 | Invention Example |
| 4 | 0.10 | 3.2 | 0.13 | 0.005 | 0.004 | 0.005 | 0.000 | 0.005 | - | 1.90 | Invention Example |
| 5 | 0.13 | 3.2 | 0.13 | 0.006 | 0.003 | 0.005 | 0.004 | 0.009 | - | 1.70 | Comparative Example |
| 6 | 0.05 | 2.1 | 0.10 | 0.002 | 0.001 | 0.006 | 0.000 | 0.006 | - | 1.76 | Comparative Example |
| 7 | 0.06 | 2.5 | 0.11 | 0.003 | 0.003 | 0.003 | 0.005 | 0.008 | - | 1.90 | Invention Example |
| 8 | 0.05 | 3.0 | 0.15 | 0.004 | 0.002 | 0.007 | 0.000 | 0.007 | - | 1.89 | Invention Example |
| 9 | 0.06 | 5.2 | 0.15 | 0.003 | 0.001 | 0.002 | 0.000 | 0.002 | - | 1.89 | Invention Example |
| 10 | 0.05 | 5.8 | 0.13 | 0.004 | 0.004 | 0.006 | 0.000 | 0.006 | - | 1.55 | Comparative Example |
| 11 | 0.04 | 3.1 | 0.004 | 0.005 | 0.005 | 0.005 | 0.000 | 0.005 | - | 1.71 | Comparative Example |
| 12 | 0.04 | 3.2 | 0.02 | 0.002 | 0.003 | 0.005 | 0.000 | 0.005 | - | 1.89 | Invention Example |
| 13 | 0.06 | 3.0 | 0.14 | 0.001 | 0.004 | 0.003 | 0.003 | 0.006 | - | 1.89 | Invention Example |
| 14 | 0.05 | 3.0 | 0.25 | 0.000 | 0.005 | 0.004 | 0.000 | 0.004 | - | 1.89 | Invention Example |
| 15 | 0.06 | 3.3 | 0.31 | 0.004 | 0.003 | 0.005 | 0.002 | 0.007 | - | 1.70 | Comparative Example |
| 16 | 0.07 | 2.9 | 0.15 | 0.005 | 0.002 | 0.001 | 0.000 | 0.001 | - | 1.90 | Invention Example |
| 17 | 0.05 | 3.0 | 0.14 | 0.003 | 0.002 | 0.005 | 0.000 | 0.005 | - | 1.89 | Invention Example |
| 18 | 0.06 | 3.2 | 0.12 | 0.004 | 0.002 | 0.009 | 0.000 | 0.009 | - | 1.90 | Invention Example |
| 19 | 0.05 | 3.0 | 0.10 | 0.005 | 0.003 | 0.013 | 0.000 | 0.013 | - | 1.72 | Comparative Example |
| 20 | 0.04 | 3.4 | 0.14 | 0.003 | 0.004 | 0.005 | 0.001 | 0.006 | - | 1.90 | Invention Example |
| 21 | 0.07 | 3.2 | 0.13 | 0.005 | 0.005 | 0.003 | 0.002 | 0.005 | - | 1.89 | Invention Example |
| 22 | 0.05 | 3.0 | 0.11 | 0.004 | 0.005 | 0.005 | 0.003 | 0.008 | - | 1.90 | Invention Example |
| 23 | 0.05 | 3.2 | 0.09 | 0.005 | 0.003 | 0.001 | 0.014 | 0.015 | - | 1.73 | Comparative Example |
| 24 | 0.07 | 3.4 | 0.08 | 0.003 | 0.003 | 0.007 | 0.000 | 0.007 | - | 1.89 | Invention Example |

**[Table 2-2]**

| 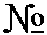 | Ingredient composition (mass%) | | | | | | | | | Magnetic flux density B₈(T) | Remarks |
|---|---|---|---|---|---|---|---|---|---|---|---|
| | C | Si | Mn | sol.Al | N | S | Se | S+Se | Others | | |
| 25 | 0.06 | 3.2 | 0.11 | 0.009 | 0.004 | 0.008 | 0.000 | 0.008 | - | 1.89 | Invention Example |
| 26 | 0.05 | 3.1 | 0.15 | 0.013 | 0.002 | 0.007 | 0.000 | 0.007 | - | 1.70 | Comparative Example |
| 27 | 0.05 | 3.3 | 0.10 | 0.007 | 0.001 | 0.006 | 0.002 | 0.008 | - | 1.89 | Invention Example |
| 28 | 0.04 | 3.1 | 0.14 | 0.009 | 0.005 | 0.006 | 0.000 | 0.006 | - | 1.90 | Invention Example |
| 29 | 0.05 | 3.4 | 0.15 | 0.005 | 0.008 | 0.007 | 0.000 | 0.007 | - | 1.72 | Comparative Example |
| 30 | 0.05 | 3.6 | 0.13 | 0.003 | 0.002 | 0.005 | 0.000 | 0.005 | Sn:0.12,Cr:0.02, P:0.01, V:0.005, B:0.0015, Bi:0.02 | 1.92 | Invention Example |
| 31 | 0.05 | 3.0 | 0.13 | 0.004 | 0.003 | 0.003 | 0.000 | 0.003 | Ni:0.02, Sn:0.12, Cu:0.10, Cr:0.06, P:0.01,Mo:0.27 | 1.92 | Invention Example |
| 32 | 0.04 | 3.2 | 0.10 | 0.005 | 0.002 | 0.002 | 0.000 | 0.002 | Sb:0.03, Sn:0.05, P:0.02, Mo:0.03, V:0.13 | 1.91 | Invention Example |
| 33 | 0.03 | 3.4 | 0.08 | 0.006 | 0.003 | 0.001 | 0.003 | 0.004 | Sb:0.08, Cr:0.06, P:0.05, Mo:0.03, B:0.0007 | 1.92 | Invention Example |
| 34 | 0.04 | 3.8 | 0.09 | 0.003 | 0.004 | 0.002 | 0.000 | 0.002 | Sb:0.11, Cu:0.03, P:0.006, Mo:0.03, Nb:0.0016 | 1.93 | Invention Example |
| 35 | 0.05 | 3.2 | 0.07 | 0.004 | 0.005 | 0.003 | 0.000 | 0.003 | Sn:0.06, Cu:0.26, P:0.01, Cr:0.03, Mo:0.02 | 1.92 | Invention Example |
| 36 | 0.04 | 3.0 | 0.09 | 0.003 | 0.003 | 0.005 | 0.000 | 0.005 | Ni:0.25, Sn:0.03, P:0.03, Mo:0.03, Zr:0.005 | 1.91 | Invention Example |
| 37 | 0.05 | 3.3 | 0.07 | 0.007 | 0.004 | 0.008 | 0.000 | 0.008 | Sb:0.04, Cu:0.05, Cr:0.06, P:0.05, Mo:0.05 | 1.92 | Invention Example |
| 38 | 0.04 | 3.5 | 0.08 | 0.004 | 0.003 | 0.002 | 0.005 | 0.007 | Ni:0.03, Sn:0.14, Cr:0.02, P:0.15, Bi:0.006 | 1.91 | Invention Example |
| 39 | 0.04 | 3.1 | 0.10 | 0.003 | 0.002 | 0.004 | 0.000 | 0.004 | Sn:0.13, Ni:0.05, Cr:0.24, P:0.01, Zr:0.06 | 1.92 | Invention Example |
| 40 | 0.03 | 3.4 | 0.12 | 0.006 | 0.002 | 0.002 | 0.000 | 0.002 | Sb:0.02, Cu:0.16, P:0.007, Mo:0.02 | 1.93 | Invention Example |
| 41 | 0.05 | 3.2 | 0.11 | 0.008 | 0.004 | 0.004 | 0.000 | 0.004 | Sb:0.02, Cu:0.05, P:0.006, Nb:0.013 | 1.92 | Invention Example |
| 42 | 0.05 | 3.2 | 0.13 | 0.006 | 0.003 | 0.003 | 0.000 | 0.003 | Sn:0.03, P:0.005, Co:0.003, Zn:0.019 | 1.94 | Invention Example |
| 43 | 0.04 | 3.3 | 0.10 | 0.005 | 0.002 | 0.002 | 0.000 | 0.002 | Sn:0.06, P:0.004, Pb:0.0003, W:0.008 | 1.94 | Invention Example |
| 44 | 0.05 | 3.3 | 0.12 | 0.003 | 0.004 | 0.004 | 0.000 | 0.004 | Sn:0.26, P:0.006, As:0.0019, Ge:0.0043 | 1.94 | Invention Example |
| 45 | 0.06 | 3.4 | 0.12 | 0.007 | 0.003 | 0.009 | 0.000 | 0.009 | Sb:0.03, P:0.008, Co:0.045, Ga:0.0044 | 1.94 | Invention Example |
| 46 | 0.03 | 3.2 | 0.10 | 0.009 | 0.005 | 0.002 | 0.004 | 0.006 | Sb:0.04, P:0.07, Pb:0.008, Zn:0.0013 | 1.94 | Invention Example |
| 47 | 0.04 | 3.3 | 0.13 | 0.004 | 0.005 | 0.002 | 0.007 | 0.009 | Sb:0.09, P:0.006, Ge:0.0004, As:0.018 | 1.95 | Invention Example |
| 48 | 0.05 | 3.2 | 0.15 | 0.006 | 0.003 | 0.003 | 0.004 | 0.007 | Sb:0.22, P:0.008, W:0.0015, Ga:0.0003 | 1.94 | Invention Example |

## Claims

1. A method for producing a grain-oriented electrical steel sheet comprising steps of:
heating a steel slab having an ingredient composition containing C: 0.02 to 0.10 mass%, Si: 2.5 to 5.5 mass%, Mn: 0.01 to 0.30 mass%, sol. Al: 0 mass% or more but less than 0.010 mass%, N: 0 mass% or more but less than 0.006 mass%, and at least one of S and Se in a total amount of 0 mass% or more but less than 0.010 mass% with a remaining part being Fe and inevitable impurities to a temperature of 1300 or lower;
subjecting the slab to hot rolling, optionally hot-band annealing, one cold rolling or two or more cold rolling with intermediate annealing between each rolling to obtain a cold-rolled sheet with a final sheet thickness;
performing primary recrystallization annealing which also serves as decarburization annealing;
applying an annealing separator; and
subjecting the steel sheet to finishing annealing,
**characterized in that**,
after soaking in the annealing step immediately preceding the cold rolling for achieving the final sheet thickness, the steel sheet is cooled from 800 to 400°C at an average cooling rate of 15°C/s or more and subsequently subjected to low-temperature heat treatment comprising holding the sheet at a temperature in a range of 60 to 100°C for 30 to 600 seconds.

2. The method for producing a grain-oriented electrical steel sheet according to claim 1, wherein,
after soaking in the annealing step preceding the cold rolling for achieving the final sheet thickness, strain is applied on the steel sheet before or during the low-temperature heat treatment comprising holding the sheet at a temperature in a range of 60 to 100°C for 30 to 600 seconds, after cooling from 800 to 400°C at an average cooling rate of 15°C/s or more.

3. The method for producing a grain-oriented electrical steel sheet according to claim 2, wherein
the strain is applied on the steel sheet using at least one method selected from bending performed once or more by winding the steel sheet around a roll at a 90° angle or more; and a light draft rolling method.

4. The method for producing a grain-oriented electrical steel sheet according to any one of claims 1 to 3, wherein
final cold rolling is started within 300 hours after completion of the low-temperature heat treatment.

5. The method for producing a grain-oriented electrical steel sheet according to any one of claims 1 to 4, wherein
the method comprises steps satisfying the following conditions:
a hot rolling step including heating a steel slab, performing rough rolling of one or more passes in a temperature range from 900 to 1200°C, performing finishing rolling of two or more passes in a temperature range from 700 to 1000°C to obtain a hot-rolled sheet, and winding the sheet into a coil at a winding temperature of 400 to 750°C;
optionally, a hot-band annealing step including holding the hot-rolled sheet at a temperature from 800 to 1250°C for 5 seconds or longer and then cooling the sheet from 800 to 400°C at a rate of 5 to 100°C/s;
optionally, an intermediate annealing step including holding the sheet at a temperature from 800 to 1250°C for 5 seconds or longer and then cooling the sheet from 800 to 400°C at a rate of 5 to 100°C/s;
a cold rolling step performed so that a total rolling reduction at the final cold rolling falls within the range of 80 to 92%;
a primary recrystallization annealing step serving as decarburization annealing including holding the sheet at a temperature from 750 to 950°C for 10 seconds or longer under a wet atmosphere containing H₂ and N₂ and having a dew point of 20 to 80°C;
an annealing separator applying step including applying an annealing separator mainly composed of MgO to a surface of the steel sheet in an amount of 2.5 g/m² or more per surface; and
a finishing annealing step that includes purification by holding the sheet at a temperature of 1050°C to 1300°C for 3 hours or longer and that is conducted under an H₂-containing atmosphere for a part of a temperature range of 800°C or higher including at least the purification.

6. The method for producing a grain-oriented electrical steel sheet according to any one of claims 1 to 5, wherein
the steel slab to be used contains, in addition to the ingredient composition, at least one selected from the group consisting of: Ni: 0 to 1.00 mass%, Sb: 0 to 0.50 mass%, Sn: 0 to 0.50 mass%, Cu: 0 to 0.50 mass%, Cr: 0 to 0.50 mass%, P: 0 to 0.50 mass%, Mo: 0 to 0.50 mass%, Nb: 0 to 0.020 mass%, V: 0 to 0.010 mass%, B: 0 to 0.0025 mass%, Bi: 0 to 0.50 mass%, and Zr: 0 to 0.10 mass% or less.

7. The method for producing a grain-oriented electrical steel sheet according to any one of claims 1 to 6, wherein
the steel slab to be used contains, in addition to the ingredient composition, at least one selected from the group consisting of Co: 0 to 0.0500 mass% and Pb: 0 to 0.0100 mass%.

8. The method for producing a grain-oriented electrical steel sheet according to any one of claims 1 to 7, wherein
the steel slab to be used contains, in addition to the ingredient composition, at least one selected from the group consisting of As: 0 to 0.0200 mass%, Zn: 0 to 0.0200 mass%, W: 0 to 0.0100 mass%, Ge: 0 to 0.0050 mass%, and Ga: 0 to 0.0050 mass%.
